# EUROPÄISCHE PATENTSCHRIFT

(11) **EP 1 640 097 B1**
(45) Veröffentlichungstag und Bekanntmachung des Hinweises auf die Patenterteilung: **17.03.2010**
(21) Anmeldenummer: 05018112.2
(22) Anmeldetag: 20.08.2005
(51) Int. Cl.: B23H 3/00, B23H 7/38

(54) **Vorrichtung und Verfahren zum elektrochemischen Senken**
Apparatus and method for electrochemical machining
Appareil et procédé pour usinage par électrochimie.

(30) Priorität: 28.08.2004 DE 102004041780
(43) Veröffentlichungstag der Anmeldung: 29.03.2006
(73) Patentinhaber: MTU Aero Engines GmbH, 80995 München (DE)
(72) Erfinder: Bayer, Erwin, 85221 Dachau (DE); Bussmann, Martin, 85247 Schwabhausen (DE); Kränzler, Thomas, 88682 Salem (DE); Platz, Albin, 86510 Ried-Baindlkirch (DE); Steinwandel, Jürgen, 88690 Uhldingen-Mühlhofen (DE)

(56) Entgegenhaltungen:
- DE-A1- 3 214 551
- US-A- 4 379 960
- US-A- 4 408 113

## Beschreibung

Die vorliegende Erfindung betrifft eine Vorrichtung und ein Verfahren zum elektrochemischen Senken eines Werkstücks.

Beim Senken wird ein Werkstück, bei dem durch Abtragen eine Formgebung bzw. Oberflächenbearbeitung vorzunehmen ist, zumindest im Bearbeitungsbereich in Umgebung eines Elektrolyts gebracht und das Werkstück elektrisch zur Masse hin kontaktiert. Eine Elektrode wird in die Nähe des Werkstücks gebracht und ist entsprechend der erforderlichen Bearbeitung geformt. Zwischen der Elektrode und dem zu bearbeitenden Werkstück fließt ein Strom durch den Elektrolyt, der sich im Zwischenraum befindet, hindurch. Zwischen diesem Elektrolyt und dem Werkstück erfolgt durch den Stromfluss ein elektrochemisches Abtragen von der Oberfläche des Werkstücks.

In Abhängigkeit des Werkstücks kann es während der elektrochemischen Bearbeitung, dem Senken, zu einer Passivierung der Oberfläche kommen. Dies geschieht dann, wenn die Abtragprodukte (Metallhydroxide und Metalloxide) weiterhin an der Oberfläche des Werkstücks anhaften und nicht von Elektrolyten abtransportiert werden. Durch das Anlagern von passivierenden Werkstoffen, die Schichten bilden, kann das gesamte elektrochemische Potential des Prozesses im Bearbeitungsbereich örtlich verändert und damit der Senkprozess, insbesondere die Formhaltigkeit, beeinflusst sein.

US-A-4,408,113,welches als nächstliegende Stand der Technik anzusehen ist, und US-A-4,379,960 zeigen ein Verfahren zum Funkenerodieren mit einem relativ breiten Spalt zwischen Elektrode und Werkstück, bei dem zum Generierung eines Flusses des Dielektrikums im Spalt direkt Schallwellen in das Dielektrikum eingebracht werden.

Darüber hinaus können bei Senkprozessen, insbesondere dann, wenn der Senkspalt zwischen Werkstück und Elektrode sehr gering ist, wie dies zum Erreichen einer hohen Präzision der Oberflächenbearbeitung und der Formhaltigkeit erforderlich ist, ungleichmäßige Verteilungen der Abtragprodukte des Werkstücks im Elektrolyten auftreten. Dies kann zu ungleichmäßigem Abtrag und damit Abweichungen der erreichten Form von der Sollform des Werkstücks nach der Bearbeitung führen. Darüber hinaus können aufgrund der Anlagerung von Abtragprodukten im Senkspalt auch gelegentliche Bearbeitungsstörungen durch Kurzschlussströme auftreten, die einerseits zu unerwünschten Beschädigungen der Elektrode in ihrer Form und daraus resultierende Bearbeitungsungenauigkeiten zur Folge haben, aber auch zu Beschädigungen des Werkstücks im Bereich des Kurzschlussstromes führen.

Diese unerwünschten Effekte sollen beim Senken vermieden werden, um ein sehr präzises elektrochemisches Bearbeiten von Werkstücken, wie beispielsweise schwer zu zerspanenden Titanbasiswerkstoffen und Nickelbasiswerkstoffen bestehenden Werkstücken, zu ermöglichen. Die Bearbeitung erfolgt dabei insbesondere durch Oberflächenbearbeitung, es kann aber auch eine formgebende Bearbeitung durch Abtragen größerer Menge des Werkstoffes von der Oberfläche sein. Aufgabe der Erfindung ist es dabei, hohe Bearbeitungsgenauigkeit durch weitgehende Reduktion des Senkspalts zwischen Elektrode und Werkstück zu ermöglichen und zum anderen sicher das Auftreten von Anlagerungen aus Passivierungsschichten und Anreicherungen von Abtragprodukten im Elektrolyt zu vermeiden.

Die der Erfindung zugrunde liegende Aufgabe wird durch eine Vorrichtung und ein Verfahren gemäß den unabhängigen Ansprüche gelöst.

Eine erfindungsgemäße Vorrichtung zum elektrochemischen Senken eines Werkstücks umfasst ein Werkstück, eine Elektrode und ein Elektrolyt, der sich zwischen Elektrode und Werkstück befindet. Dabei ist die Elektrode mit geringem Spaltmaß zum Werkstück geführt gehalten und durch Stromfluss zwischen Elektrode und Werkstück durch den Elektrolyt hindurch erfolgt ein Bearbeiten des Werkstücks. Darüber hinaus ist eine Sonotrode zum Einleiten von Schallwellen unmittelbar an das Werkstück gekoppelt, wobei die Schallwellen auf diese Weise mittelbar in den Elektrolyten eingekoppelt werden, dass die Bildung von Passivierungsschichten verhindert wird.

Durch das Einkoppeln der Schallwellen in das Werkstück entstehen mittelbar Schwingungen insbesondere im Bereich des Elektrolyts, die derart ausgeführt sind, dass die Pulsation im Elektrolyt dafür sorgt, dass die Bildung von Passivierungsschichten an der Oberfläche des Werkstücks im Bearbeitungsbereich wirksam verhindert wird. Darüber hinaus wird durch die Verwirbelung des Elektrolyten eine feine Verteilung der abgetragenen Partikel erreicht. Dies führt zu einer engeren Toleranz der Leitfähigkeit im gesamten Spalt und damit abzutragenden Bereich, so dass der Senkprozess gleichmäßiger und effektiver erfolgt. Die Bearbeitungsgenauigkeit wird erhöht.

Das Einstrahlen der Schallwellen erfolgt in das Werkstück

Ein Einkoppeln der Schallwellen in das Werkstück ist von Vorteil, wenn bei komplizierten Formen das Senken in einem lokal definierten Bereich des Werkstücks erfolgt, aber kein tiefes Eindringen der Elektrode in das Werkstück erfolgt.

Es entspricht vorteilhafter Ausgestaltung der Erfindung, wenn die Sonotrode Schallwellen im Ultraschallbereich erzeugt, wobei die Frequenz der Schallwellen gemäß weiterführender vorteilhafter Ausgestaltung insbesondere derart bestimmt ist, dass im Elektrolyt, hier insbesondere im Senkspalt zwischen Elektrode und Werkstück, keine stehenden Wellen ausgebildet werden. Das Auftreten von stehenden Wellen, insbesondere im Senkspalt, soll vermieden werden, um lokale Anreicherungen von Abbauprodukten oder verbrauchtem Elektrolyt zu vermeiden. Die Verwendung von Ultraschallwellen ist deshalb von Vorteil, weil durch die relativ hochfrequenten Wellen ein guter Transport von Partikeln im Elektrolyt erreicht werden kann.

In vorteilhafter Ausgestaltung der Erfindung ist vorgesehen, dass die Sonotrode so angeordnet ist, dass das Abstrahlen der Schallwellen insbesondere in der Nähe des Senkbereichs erfolgt. Durch diese Maßnahme kann die Energie der eingestrahlten Schallwellen niedrig gehalten werden.

Es entspricht vorteilhafter Ausgestaltung der Erfindung, wenn es sich bei dem Werkstück um ein metallisches Werkstück, insbesondere aus einem hochfesten Werkstoff, wie einem Werkstoff auf Titan- oder Nickelbasis handelt. Bei derartigen Werkstoffen treten Passivierungsschichten und Verteilungsprobleme der Abtragprodukte im Elektrolyt besonders häufig auf. Sie werden durch das erfindungsgemäße Einleiten von Schallwellen, insbesondere im Ultraschallbereich, durch die Sonotrode vermieden und hierdurch wird die Bearbeitungsgenauigkeit des Werkstücks beim elektrochemischen Senken besonders vorteilhaft erhöht.

Gemäß dem erfindungsgemäßen Verfahren zum elektrochemischen Senken eines Werkstücks wird die Elektrode mit einem Senkspalt, welcher ein geringes Spaltmaß aufweist, über die Oberfläche eines zu bearbeitenden Werkstücks geführt, wobei der Senkspalt zwischen Elektrode und Oberfläche des Werkstücks durch einen Elektrolyten ausgefüllt ist und durch den Elektrolyt ein Strom zwischen Elektrode und Werkstück fließt. Darüber hinaus ist vorgesehen, dass mittels einer Sonotrode Schallwellen erzeugt und eingekoppelt werden. Die Schallwellen werden dabei derart mittelbar in den Elektrolyten eingekoppelt, dass ein Durchfluss von Elektrolyt durch den Senkspalt erfolgt und die Bildung von Passivierungsschichten verhindert wird.

Das Einkoppeln bzw. Einleiten der Schallwellen während des elektrochemischen Senkens verhindert eine Beeinflussung des elektromagnetischen Feldes zwischen Elektrode und Werkstück aufgrund ungleichmäßiger Verteilung der Abtragprodukte im Elektrolyten. Durch diese Maßnahme wird die Bearbeitungsgenauigkeit des elektrochemischen Senkens erhöht und insbesondere das Bearbeiten mit Senkspalten geringen Spaltmaßes als bisher üblich ermöglicht.

Gemäß vorteilhafter Ausgestaltung der Erfindung werden die Schallwellen der Sonotrode mittelbar über das Werkstück in den Elektrolyten eingekoppelt. Dabei hat das Einkoppeln der Schallwellen aus der Sonotrode über das Werkstück insbesondere den Vorteil, dass die Schallwellen durch das Werkstück hindurch gehen und deshalb in besonders günstiger Weise das Entstehen von Passivierungsschichten im Bereich der Oberfläche des Werkstücks im Bearbeitungsbereich, also im Senkspalt, verhindert wird. Die eingeleiteten Schallwellen, insbesondere Ultraschallwellen können den Durchfluss des Elektrolyten durch den Senkspalt insbesondere aktiv unterstützen und einen Pumpeffekt erzeugen. Bei den von der Sonotrode erzeugten Schallwellen handelt es sich dabei insbesondere um Ultraschallwellen, wobei vorzugsweise sichergestellt ist, dass im Bereich des Senkspalts keine stehenden Wellen im Elektrolyt ausgebildet werden.

Im Übrigen ist die Erfindung nachfolgend anhand der in der Zeichnung dargestellten Ausführungsbeispiele näher erläutert. Dabei zeigen:
- Figur 1: schematische Darstellung einer erfindungsgemäßen Vorrichtung zum elektrochemischen Senken mit einer Sonotrode zum Einleiten von Schallwellen.
- Figur 2 und 3: schematische Darstellung einer Vorrichtung gemäß des Standes der Technik.

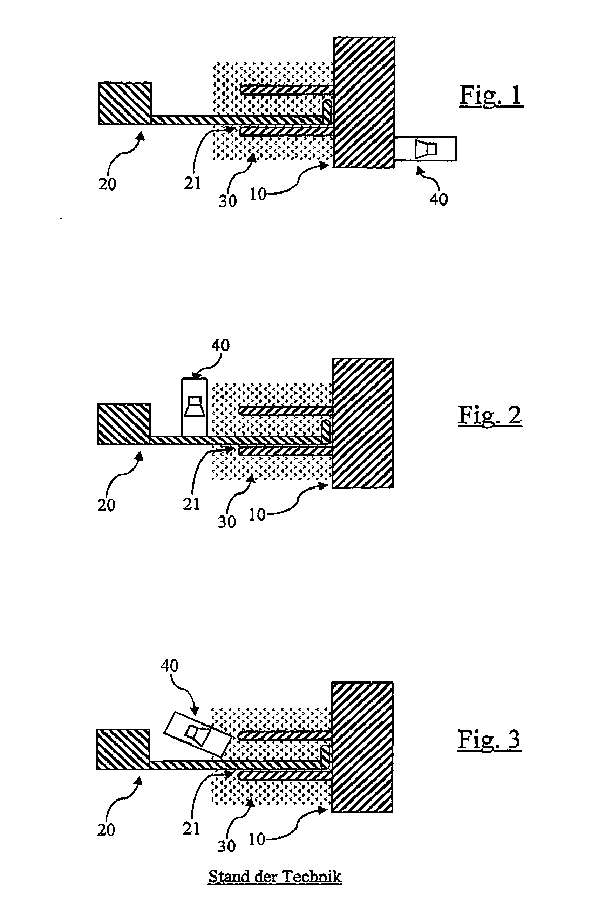

Figur 1 zeigt eine schematische Anordnung, bei der die Sonotrode im Bearbeitungsbereich des Werkstücks angeordnet ist, die Figur 2 eine Anordnung, bei der die Sonotrode in der Elektrode angeordnet ist und die Figur 3 eine schematische Darstellung eines Ausführungsbeispiels gemäß des Standes der Technik, bei dem die Sonotrode die Schallwellen unmittelbar in den Elektrolyt einkoppelt.

Die Figuren zeigen ein Werkstück 10, das durch elektrochemisches Senken bearbeitet wird. Hierzu wird die Elektrode 20 relativ zum Werkstück geführt, wobei ein Senkspalt 21 mit möglichst geringem Spaltmaß zwischen Elektrode 20 und Werkstück 10 eingehalten wird. Darüber hinaus ist wenigstens im Bereich des Senkspalts 21 ein Elektrolyt 30 vorgesehen. Zum Durchführen des Senkprozesses fließt zwischen der Elektrode 20 und dem Werkstück 10 durch das Elektrolyt 30 hindurch ein Strom. Durch den Strom reagiert der Werkstoff des Werkstücks 10 mit den Elektrolyten 30, es bilden sich Hydroxide bzw. Oxide des Werkstoffs aus, welche durch den Elektrolyten und unterstützt durch die mittels der Sonotrode 40 eingeleiteten Ultraschallwellen aus dem Senkspalt 21 heraustransportiert werden.

Die Ausführungsform gemäß der Figur 1 zeigt dabei eine Sonotrode 40, welche im Bereich des Werkstücks 10 angeordnet ist. Im Gegensatz dazu zeigt die Figur 2 eine Sonotrode 40, welche an der Elektrode 20 angeordnet ist gemäß des Standes der Technik.

Gemäß der in der Figur 3 dargestellten Ausführungsform gemäß des Standes der Technik erfolgt das Einkoppeln der von der Sonotrode 40 erzeugten Schallwellen im Gegensatz direkt in den Elektrolyt.

## Patentansprüche

1. Vorrichtung zum elektrochemischen Senken eines Werkstücks (10), mit einem Werkstück (10), einer Elektrode (20) und einem zwischen Elektrode (20) und Werkstück (10) befindlichen Elektrolyten (30), bei der die Elektrode (20) mit geringem Spaltmaß zum Werkstück (10) geführt und durch Stromfluss zwischen Elektrode (20) und Werkstück (10) durch den Elektrolyt (30) ein Bearbeiten des Werkstücks (10) erfolgt und eine Sonotrode (40) zur Einleitung von Schallwellen angeordnet ist, **dadurch gekennzeichnet, dass** die Sonotrode (40) unmittelbar an das Werkstück (10) gekoppelt ist und Schallwellen derart mittelbar über das Werkstück (10) in den Elektrolyten (30) einkoppelt, dass die Bildung von Passivierungsschichten im Bearbeitungsbereich verhindert wird.

2. Vorrichtung nach Anspruch 1, **dadurch gekennzeichnet, dass** die Sonotrode (40) Ultraschall erzeugt.

3. Vorrichtung nach Anspruch 2, **dadurch gekennzeichnet, dass** die Frequenz der Schallwellen derart bestimmt ist, dass im Elektrolyt (30) keine stehenden Wellen ausgebildet werden.

4. Vorrichtung nach einem der vorhergehenden Ansprüche, **dadurch gekennzeichnet, dass** es sich bei dem Werkstück (10) um ein Werkstück (10) aus einem metallischen Werkstoff, insbesondere einem hochfesten Werkstoff wie Werkstoffen auf Titan- oder auf Nickelbasis handelt.

5. Verfahren zum elektrochemischen Senken eines Werkstücks (10), bei dem eine Elektrode (20) mit einem Senkspalt (21) geringen Spaltmaßes über die Oberfläche eines zu bearbeitenden Werkstücks (10) geführt wird und durch den zwischen Elektrode (20) und Oberfläche vorhandenen Elektrolyten (30) ein Strom zwischen Elektrode (20) und Werkstück (10) geleitet wird, wobei durch eine Sonotrode (40) Schallwellen erzeugt und eingekoppelt werden, **dadurch gekennzeichnet, dass** die Schallwellen, durch eine unmittelbar an das Werkstück (10) gekoppelte Sonotrode mittelbar über das Werkstück (10) in den Elektrolyten (30) eingekoppelt werden, wobei ein Durchfluss von Elektrolyt (30) durch den Senkspalt (21) zwischen Elektrode (20) und Werkstück (10) erfolgt und die Bildung von Passivierungsschichten im Bearbeitungsbereich verhindert wird.

## Claims

1. A device for electrochemically machining a workpiece (10), having a workpiece (10), an electrode (20) and an electrolyte (30) located between the electrode (20) and the workpiece (10), in which the electrode (20) is guided with a small gap dimension with respect to the workpiece (10), and processing of the workpiece (10) is effected by means of a flow of current between the electrode (20) and the workpiece (10) through the electrolyte (30), and a sonotrode (40) is provided for the introduction of sound waves,
**characterised in that** the sonotrode (40) is coupled to the workpiece (10) directly, and sound waves are coupled into the electrolyte (30) indirectly by way of the workpiece (10) in such a way that the formation of passivating layers in the processing region is prevented.

2. A device according to claim 1, **characterised in that** the sonotrode (40) generates ultrasound.

3. A device according to claim 2, **characterised in that** the frequency of the sound waves is determined in such a way that no standing waves are formed in the electrolyte (30).

4. A device according to one of the preceding claims,
**characterised in that** the workpiece (10) is a workpiece made from a metallic material, in particular a high-strength material, such as titanium-based or nickel-based materials.

5. A method for electrochemically machining a workpiece (10), in which an electrode (20) is guided over the surface of a workpiece (10) that is to be processed with a machining gap (21) which has a small gap dimension, and a current is directed between the electrode (20) and the workpiece (10) through the electrolyte (30) present between the electrode (20) and the surface, wherein sound waves are generated and coupled in by means of a sonotrode (40),
**characterised in that** by means of a sonotrode that is coupled to the workpiece (10) directly the sound waves are coupled into the electrolyte (30) indirectly by way of the workpiece (10), wherein through-flow of electrolyte (30) is effected through the machining gap (21) between the electrode (20) and the workpiece (10), and the formation of passivating layers in the processing region is prevented.

## Revendications

1. Dispositif pour l'usinage en plongée électro chimique d'une pièce (10), comportant une pièce (10), une électrode (20) et un électrolyte (30), situé entre l'électrode (20) et la pièce (10), dans lequel dispositif l'électrode (20) est guidée avec une faible fente vers la pièce (10) et, sous l'effet d'un flux de courant à travers l'électrolyte (30) entre l'électrode (20) et la pièce (10), il se produit un usinage de la pièce (10), et une sonotrode (40) est disposée pour introduire des ondes sonores, **caractérisé en ce que** la sonotrode (40) est couplée directement à la pièce (10), et les ondes sonores sont injectées dans l'électrolyte (30) indirectement par l'intermédiaire de la pièce (10), de manière à empêcher la formation de couches de passivation dans la zone d'usinage.

2. Dispositif selon la revendication 1, **caractérisé en ce que** la sonotrode (40) génère des ultrasons.

3. Dispositif selon la revendication 2, **caractérisé en ce que** la fréquence des ondes sonores est déterminée de telle sorte qu'il ne se forme pas d'ondes immobiles dans l'électrolyte (30).

4. Dispositif selon l'une quelconque des revendications précédentes, **caractérisé on ce que** la pièce (10) est une pièce (10) en matériau métallique, en particulier un matériau très résistant, tel que les matériaux à base de titane ou de nickel.

5. Procécé pour l'usinage en plongée électrochimique d'une pièce (10), dans lequel une électrode (20) est guidée avec une fente d'usinage (21) de faible dimension sur la surface d'une pièce (10) à usiner et un courant est guidé entre l'électrode (20) et la pièce (10) en passant à travers l'électrolyte (30), situé entre l'électrode (20) et la surface, des ondes sonores étant générées et injectées par une sonotrode (40) **caractérisé en ce que** les ondes sonores sont injectées dans l'électrolyte (30), indirectement par l'intermédiaire de la pièce (10), au moyen d'une sonotrode, couplée directement à la pièce (10), l'électrolyte (30) circulant à travers la fente d'usinage (21) entre l'électrode (20) et la pièce (10), et la formation de couches de passivation dans la zone d'usinage étant empêchée.
